# EUROPEAN PATENT APPLICATION

(11) **EP 2 600 624 A1**
(43) Date of publication of application: **05.06.2013**
(21) Application number: 11811962.7
(22) Date of filing: 02.05.2011
(51) Int. Cl.: H04N 13/02, G03B 11/04, G03B 17/14, G03B 17/18, G03B 17/56, G03B 35/10, H04N 5/225, H04N 5/232

(54) **IMAGE CAPTURING DEVICE**

(30) Priority: 27.07.2010 JP 2010167984
(71) Applicant: Panasonic Corporation, Osaka 571-8501 (JP)
(72) Inventor: INOUE, Masayuki, Chuo-ku Osaka 540-6207 (JP); TABATA,Kazumasa, Chuo-ku Osaka 540-6207 (JP); YABUKI, Takanori, Chuo-ku Osaka 540-6207 (JP); NAGAI, Tadashi, Chuo-ku Osaka 540-6207 (JP)
(74) Representative: Eisenführ, Speiser & Partner
(86) International application number: PCT/JP2011/002539
(87) International publication number: WO 2012/014355

(57) **Abstract**

An imaging apparatus can be connected to a 3D adapter having an optical system capable of condensing light for forming an image for a left-eye and light for forming an image for a right-eye and can be set into an adjusting mode for adjusting the optical system. The imaging apparatus includes an image pickup unit operable to capture an image formed based on the lights condensed by the 3D adapter, and a display unit operable to display the image captured by the image pickup unit. When the imaging apparatus is set to the adjusting mode, the display unit overlaps and displays the image for a left-eye and the right-eye image captured by the image pickup unit.

## Description

### Technical Field

The present invention relates to an imaging apparatus. The invention particularly relates to the imaging apparatus to which a 3D conversion lens can be attached.

### Background Art

Patent Document 1 discloses a 3D adapter (camera lens adapter for capturing stereoscopic image) and an imaging apparatus to which the adapter can be attached. When the attached 3D adapter is rotated about an optical axis, it can adjust an attachment state of the 3D adapter. In the imaging apparatus, when the attachment state of the 3D adapter is adjusted, a slitted adapter cap is attached to the 3D adapter so that the adjustment is made.

When a subject image is captured in this state, a user can recognize how much the 3D adapter rotates about the optical axis with respect to the imaging apparatus through a rotating state of the captured image.

### Prior Art Document

### Patent Document

Patent Document 1: JP-A-2003-50438

### Summary of Invention

### Problems to be Solved by the Invention

In the imaging apparatus disclosed in Patent Document 1, when imaging positions of an image for a left-eye (left-eye image) and an image for a right-eye (right-eye image) on an imaging device are adjusted, the left-eye image and the right-eye image are arranged transversely, and thus displacement of both the images in a vertical direction is hardly recognized in an accurate manner. In the 3D adapter of Patent Document 1, when the imaging positions of the left-eye image and the right-eye image on the imaging device are adjusted, both the left-eye image and the right-eye image simultaneously move to opposite directions, and thus fine adjustment is difficult because of its structure. In the imaging apparatus of Patent Document 1, the accurate adjustment of the attachment state of the 3D adapter is difficult.

It is an object of the present invention to provide an imaging apparatus capable of adjusting the attachment state of the 3D adapter with high accuracy.

### Means for Solving the Problem

An imaging apparatus according to a first aspect can be connected to a 3D adapter having an optical system capable of condensing light for forming an image for a left-eye and light for forming an image for a right-eye and can be set into an adjusting mode for adjusting the optical system. The imaging apparatus includes an image pickup unit operable to capture an image formed based on the lights condensed by the 3D adapter, and a display unit operable to display the image captured by the image pickup unit, wherein when the imaging apparatus is set to the adjusting mode, the display unit overlaps and displays the image for a left-eye and the right-eye image captured by the image pickup unit.

An imaging apparatus according to a second aspect can be connected to a 3D adapter having an optical system capable of condensing light for forming an image for a left-eye and light for forming an image for a right-eye and can be set into an adjusting mode for adjusting the optical system. The imaging apparatus includes an image pickup unit operable to capture an image formed based on the lights condensed by the 3D adapter, wherein the adjusting mode includes a first mode for adjusting a position on the image pickup unit where any one of the image for a left-eye and the right-eye image is formed, and a second mode for aligning a position on the image pickup unit in the vertical direction where the other image is formed with a position on the image pickup unit in a vertical direction where one image adjusted in the first mode is formed.

### Effects of the Invention

In the imaging apparatus according to a first aspect, since the image for a left-eye and the right-eye image captured by the image pickup unit are overlapped to be displayed at a time of adjusting the attachment state of the 3D adapter, the user can easily recognize displacement between the imaging positions of the image for a left-eye and the imaging positions of the right-eye image at the time of adjustment. Therefore, the attachment state of the 3D adapter can be accurately adjusted.

In the imaging apparatus from a second aspect, the positions of both the image for a left-eye and the right-eye image in the vertical direction can be individually adjusted at the time of adjusting the attachment state of the 3D adapter. Therefore, the attachment state of the 3D adapter can be accurately adjusted.

### Brief Description of Drawings

Fig. 1 is a perspective view illustrating a 3D conversion lens 500 attached to a digital video camera 100.
Fig. 2 is a perspective view illustrating the 3D conversion lens 500 detached from the digital video camera 100.
Fig. 3 is a schematic diagram for describing image data captured by the digital video camera 100 to which the 3D conversion lens 500 is attached.
Fig. 4 is a schematic diagram illustrating a configuration of the 3D conversion lens 500 and an optical system of the digital video camera 100.
Fig. 5 is a top view of an adjustment mechanism housing unit 530 in an opened state.
Figs. 6A and 6B are perspective views illustrating a lens cap 570 when viewed from the inside, and a perspective view illustrating the lens cap 570 when viewed from the outside.
Fig. 7 is a schematic diagram illustrating a configuration of the lens cap 570 viewed from a surface opposed to a lens cap attaching portion 520 when the lens cap 570 is attached to the lens cap attaching portion 520.
Fig. 8 is a block diagram illustrating a configuration of the digital video camera 100.
Fig. 9A is a flowchart illustrating a case where the digital video camera 100 detects attachment of the 3D conversion lens 500.
Fig. 9B is a flowchart illustrating an operation in a case where the digital video camera 100 is powered OFF.
Fig. 10 is a schematic diagram for describing a display content of a liquid crystal display monitor 270 at an initial setting time.
Fig. 11 is a schematic diagram for describing a display content of the liquid crystal display monitor 270 at a time when an inquiry is made if the 3D conversion lens 500 is adjusted.
Fig. 12 is a schematic diagram for describing a display content of the liquid crystal display monitor 270 at the time when the 3D conversion lens 500 is to be adjusted.
Fig. 13 is a flowchart for describing an operation of the digital video camera 100 in which power is ON.
Fig. 14 is a schematic diagram for describing a display content of the liquid crystal display monitor 270 when a 3D lens is attached in both states that the power is OFF and the power is ON after the power OFF.
Fig. 15 is a schematic diagram illustrating display of the liquid crystal display monitor 270 at a time when a position of a left-eye image in a vertical direction and a position of a right-eye image in the vertical direction are adjusted.
Fig. 16 is a schematic diagram illustrating display of the liquid crystal display monitor 270 at the time when the position of the left-eye image in the vertical direction and the position of the right-eye image in the vertical direction are adjusted.

### Mode for Carrying Out the Invention

### 1. First Embodiment

A first embodiment where the present invention is applied to a digital video camera will be described with reference to the drawings.

### 1-1. Outline

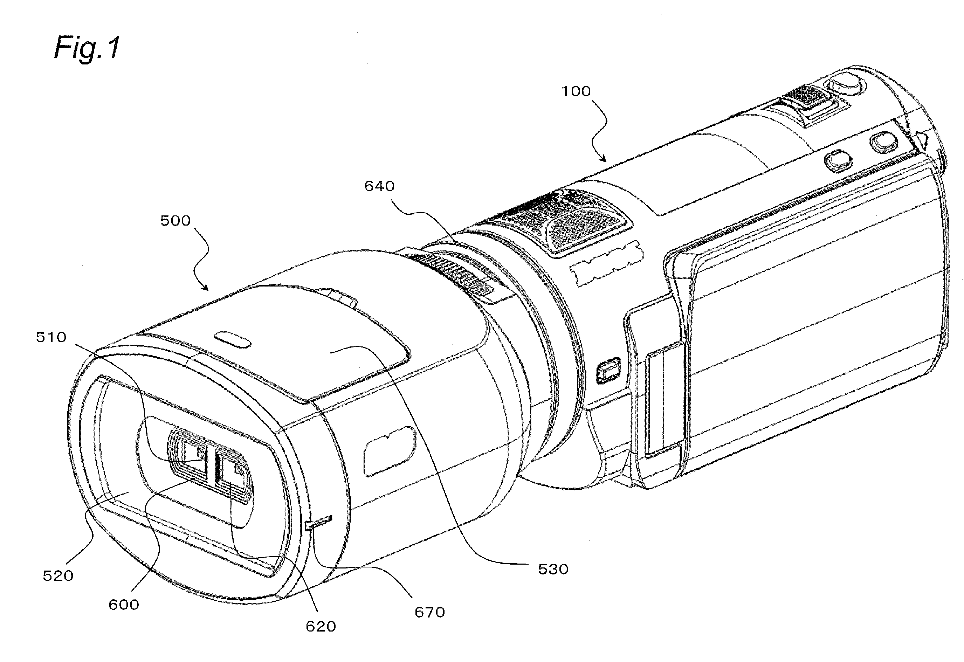

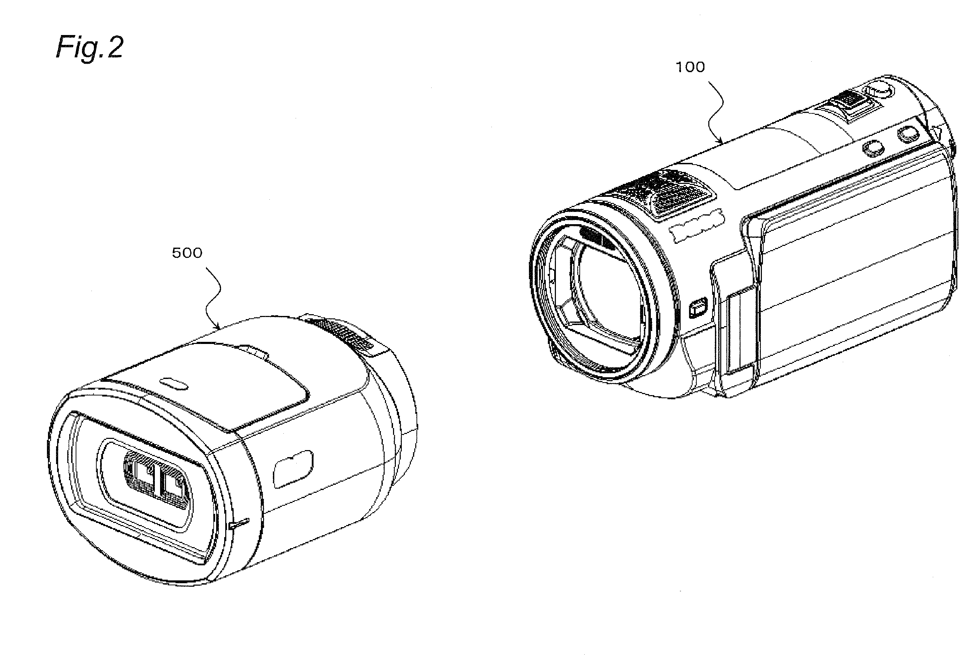

An outline of a digital video camera 100 according to the first embodiment will be described with reference to Figs. 1 to 3. Fig. 1 is a perspective view illustrating a 3D conversion lens 500 attached to the digital video camera 100. Fig. 2 is a perspective view illustrating the 3D conversion lens 500 detached from the digital video camera 100.

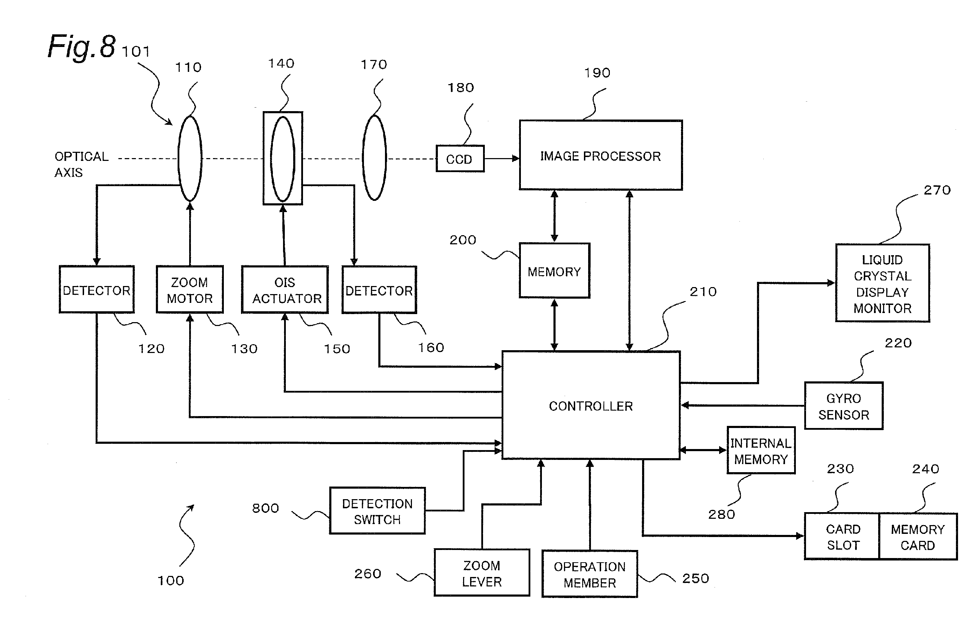

As shown in Fig. 1, the digital video camera 100 has an attaching portion 640 for attaching the 3D conversion lens 500. The attaching portion 640 has an internal thread inside. On the other hand, the 3D conversion lens 500 has an external thread to be engaged with the internal thread of the attaching portion 640. A user engages the external thread of the 3D conversion lens 500 with the internal thread of the attaching portion 640 to be capable of attaching the 3D conversion lens 500 to the digital video camera 100. The digital video camera 100 can magnetically detect that the 3D conversion lens 500 is attached with a detection switch 800 (see Fig. 8, described later).

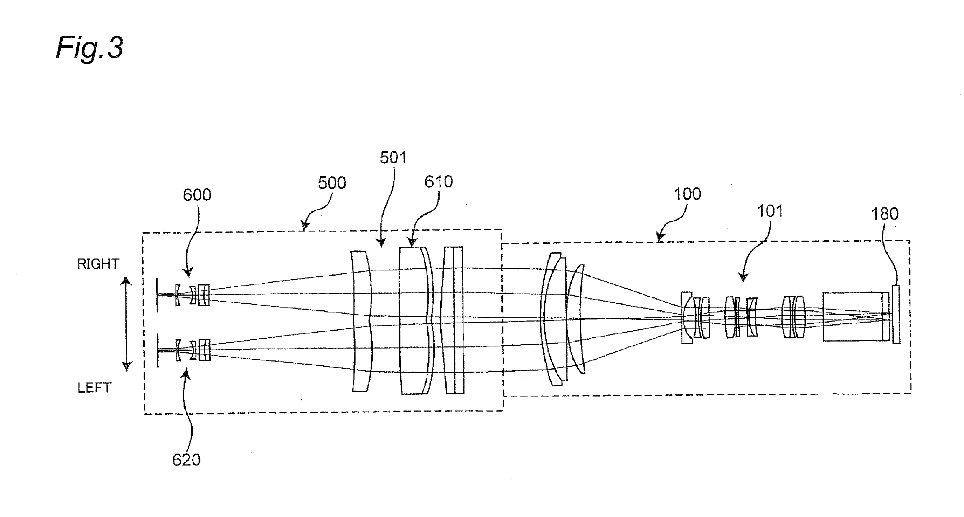

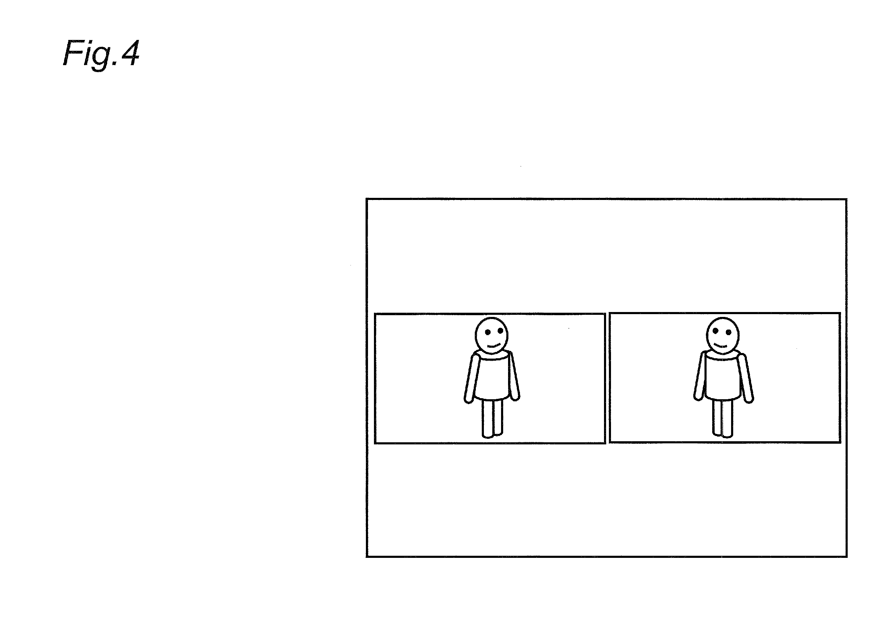

Fig. 3 is a diagram describing configurations of an optical system 501 of the 3D conversion lens 500 and an optical system 101 of the digital video camera 100. The optical system 501 of the 3D conversion lens 500 has a right-eye lens 600 for introducing light for forming a subject image for a right-eye (right eye subject image) in a 3D (three dimensions) image, a left-eye lens 620 for introducing light for forming a subject image for a left-eye (left eye subject image), and a common lens 610 that is configured so that a left-eye lens and a right eye lens are integrated, and guides the lights introduced into the right-eye lens 600 and the left-eye lens 620 in the optical system 101 of the digital video camera 100. The lights incident on the right-eye lens 600 and the left-eye lens 620 of the 3D conversion lens 500 are introduced into the optical system 101 of the digital video camera 100 via the common lens 610, and are imaged as an image of a side-by-side format on a CCD image sensor 180 of the digital video camera 100 (see Fig. 8, described later), for example, as shown in Fig. 4. The right-eye lens 600 and the left-eye lens 620 are configured to be movable up, down, right and left in the 3D conversion lens 500 (a direction vertical to an optical axis).

With return to Fig. 1, the 3D conversion lens 500 has the adjustment mechanism housing unit 530. Adjustment dials, such as a horizontal adjustment dial, a first vertical adjustment dial and a second vertical adjustment dial, described later, are housed in the adjustment mechanism housing unit 530.

The user can adjust positions of the right-eye lens 600 and the left-eye lens 620 in the 3D conversion lens 500 by operating the various adjustment dials. When the positions of the right-eye lens 600 and the left-eye lens 620 in the 3D conversion lens 500 are adjusted respectively, the light incident on the 3D conversion lens 500 is imaged on a position on the CCD image sensor 180 of the digital video camera 100 according to the adjustment amount.

The digital video camera 100 according to the first embodiment has a function for making adjustment easy after the 3D conversion lens 500 is attached.

### 1-2. Adjustment Dials

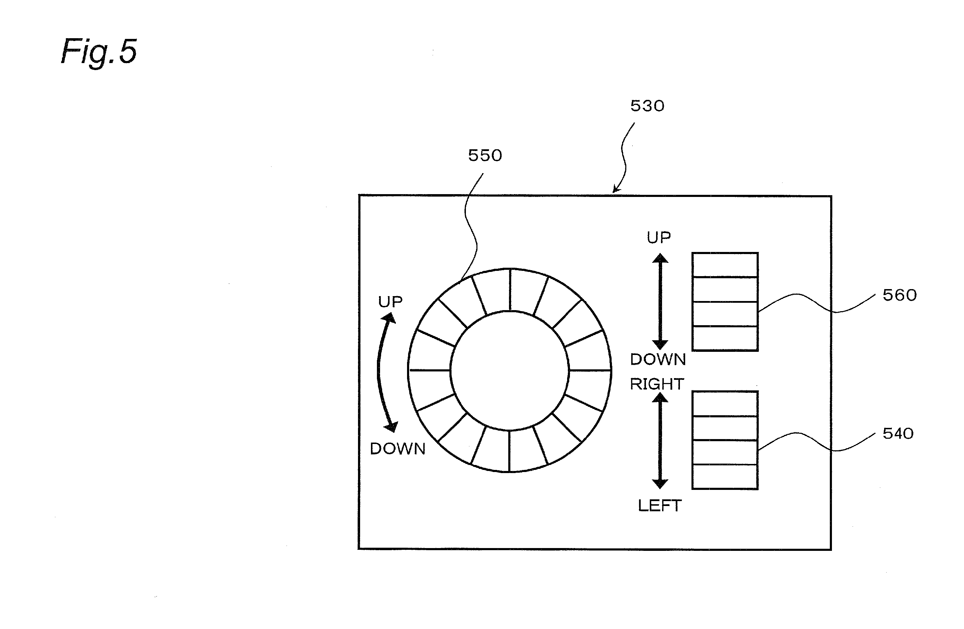

The various adjustment dials housed in the adjustment mechanism housing unit 530 will be described with reference to Fig. 5. Fig. 5 is a top view of the adjustment mechanism housing unit 530 in an opened state. The horizontal adjustment dial 540, the first vertical adjustment dial 550, and the second vertical adjustment dial 560 are housed in the adjustment mechanism housing unit 530. The horizontal adjustment dial 540 is a dial for adjusting positions of the right-eye lens 600 and the left-eye lens 620 in a horizontal direction. The first vertical adjustment dial 550 is a dial for adjusting positions of the right-eye lens 600 and the left-eye lens 620 in a vertical direction. The second vertical adjustment dial 560 is a dial for adjusting a position of the left-eye lens 620 in the vertical direction. The horizontal adjustment dial 540, the first vertical adjustment dial 550 and the second vertical adjustment dial 560 have a gear shape. The horizontal adjustment dial 540 and the second vertical adjustment dial 560 are retained by a shaft, not shown, provided in a direction vertical to an arrow direction to be turnable in the arrow direction. The user can turn the horizontal adjustment dial 540 and the second vertical adjustment dial 560 to the arrow direction. Further, the first vertical adjustment dial 550 is retained by a shaft provided in a normal direction of a surface of the adjustment mechanism housing unit 530 to be turnable to an arrow direction (namely, a circumferential direction). The user can turn the first vertical adjustment dial 550 to the arrow direction.

When the user operates the horizontal adjustment dial 540, the right-eye lens 600 and the left-eye lens 620 move to the horizontal direction in the 3D conversion lens 500. When the user operates the first vertical adjustment dial 550, the right-eye lens 600 and the left-eye lens 620 move to the vertical direction in the 3D conversion lens 500. When the user operates the second vertical adjustment dial 560, the left-eye lens 620 moves to the vertical direction in the 3D conversion lens 500.

In such a configuration, the user can adjust the imaging positions of the lights incident via the right-eye lens 600 and the left-eye lens 620 on the CCD image sensor 180 by operating the horizontal adjustment dial 540, the first vertical adjustment dial 550 and the second vertical adjustment dial 560.

### 1-3. Configuration of the Lens Cap

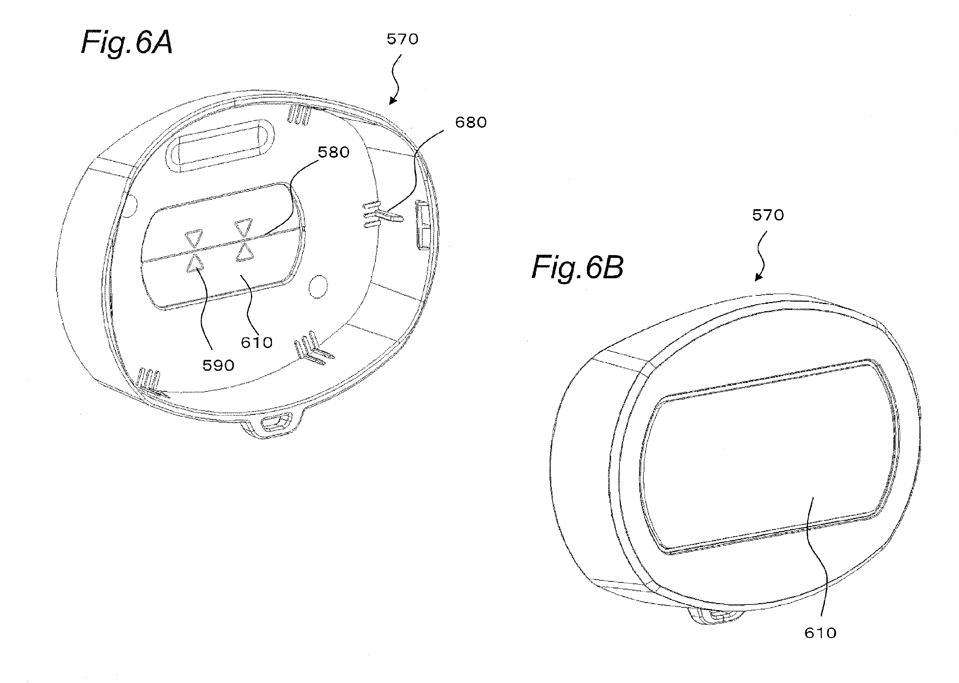

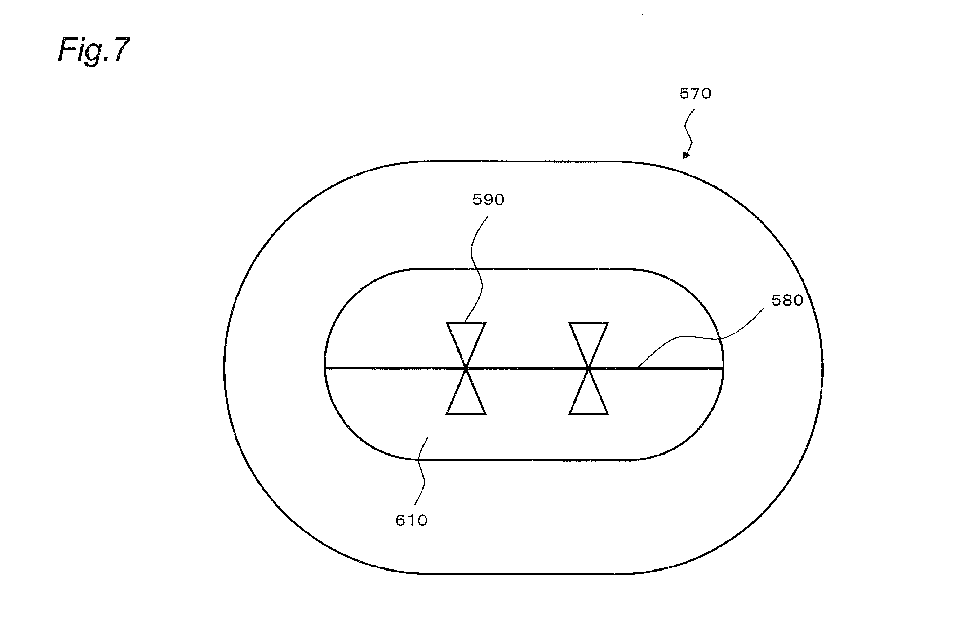

In the first embodiment, the lens cap 570 is attachable to the 3D conversion lens 500. Particularly in the state that the lens cap 570 is attached to the 3D conversion lens 500, the optical system 501 of the 3D conversion lens 500 can be adjusted. The lens cap 570 will be described below with reference to Figs. 6 and 7. The lens cap 570 is attachable to the lens cap attaching portion 520. Fig. 6A is a perspective view illustrating a state that the lens cap 570 is viewed from an inner surface side. Fig. 6B is a perspective view illustrating a state that the lens cap 570 is viewed from an outer surface side. Fig. 7 is a schematic diagram illustrating the configuration of the lens cap 570 viewed from the surface opposed to the lens cap attaching portion 520 when the lens cap 570 is attached to the lens cap attaching portion 520.

The inner surface of the lens cap 570 is provided with a structure for defining an attaching position with respect to the 3D conversion lens 500 and preventing the rotation of the lens cap 570 with respect to the 3D conversion lens 500. Concretely, a protrusion 680 is formed at right and left of the inner surface of the lens cap 570. Further, a groove 670 is provided at right and left of an outer periphery of a front end of the 3D conversion lens 500 as shown in Fig. 1. When the lens cap 570 is attached to the 3D conversion lens 500, the protrusion 680 of the lens cap 570 is engaged with the groove 670 of the 3D conversion lens 500. As a result, the attaching position of the lens cap 570 with respect to the 3D conversion lens 500 is defined, and the rotation of the lens cap 570 with respect to the 3D conversion lens 500 can be prevented.

The lens cap 570 is provided with a pattern as shown in Figs. 6A and 7. Concretely, the lens cap 570 is provided with a reference line 580 composed of a straight line that extends in the horizontal direction. The lens cap 570 is provided with a pattern 590 composed of two triangles arranged axisymmetrically with respect to the reference line 580. The pattern 590 is arranged in a bilaterally symmetrical manner with the midpoint of the reference line 580 being a center. A region 610 is composed of resin that transmits light. Therefore, the digital video camera 100 can capture the pattern shown in Fig. 7 with the lens cap 570 being attached to the lens cap attaching portion 520. Since the pattern 590 is the pattern composed of the two triangles, it has a line extending diagonally. For this reason, the pattern 590 has an advantage of being easily focused in a contrast AF system. The pattern does not have to be a triangle as long as it has the line extending diagonally.

### 1-2. Configuration

### 1-2-1. Electrical Configuration

An electrical configuration of the digital video camera 100 according to the embodiment will be described with reference to Fig. 3. Fig. 3 is a block diagram illustrating a configuration of the digital video camera 100. The digital video camera 100 has an optical system 101, the CCD image sensor 180, an image processor 190, a liquid crystal display monitor 270, a detector 120, a zoom motor 130, an OIS actuator 150, the detector 160, a memory 200, a zoom lever 260, an operation member 250, an internal memory 280, a gyro sensor 220, a controller 210, an HDMI unit 290, and a card slot 230. In the digital video camera 100, the CCD image sensor 180 captures a subject image formed by the optical system 101. Video data generated by the CCD image sensor 180 is subject to various processes in the image processor 190, and is stored in the memory card 240. Further, the video data stored in the memory card 240 can be displayed on the liquid crystal display monitor 270.

The optical system 101 of the digital video camera 100 includes a zoom lens 110, an OIS 140, and a focus lens 170. The zoom lens 110 moves along an optical axis of the optical system 101 to be capable of enlarging or reducing a subject image. The focus lens 170 moves along the optical axis of the optical system 101 to adjust a focus of the subject image.

The OIS 140 has a correcting lens that can move in a plane vertical to the optical axis inside. The OIS 140 drives the correcting lens to a direction where a shake of the digital video camera 100 is cancelled to reduce a shake of a subject image.

The zoom motor 130 drives the zoom lens 110. The zoom motor 130 may be realized by a pulse motor, a DC motor, a linear motor, a servo motor or the like. The zoom motor 130 may drive the zoom lens 110 via a cam mechanism or a mechanism such as a ball screw. The detector 120 detects a position on the optical axis where the zoom lens 110 is present. The detector 120 outputs a signal relating to the position of the zoom lens through a switch such as a brush according to the transfer of the zoom lens 110 to an optically axial direction.

The OIS actuator 150 drives the correcting lens in the OIS 140 in a plane vertical to the optical axis. The OIS actuator 150 can be realized by a planar coil or an ultrasonic motor. The detector 160 detects a moving distance of the correcting lens in the OIS 140.

The CCD image sensor 180 captures a subject image formed by the optical system 101 composed of the zoom lens 110 to generate video data. The CCD image sensor 180 performs various operations such as exposure, transfer and an electronic shutter.

The image processor 190 executes the various processes on video data generated by the CCD image sensor 180 to generate video data to be displayed on the liquid crystal display monitor 270 or generate video data to be again stored in the memory card 240. For example, the image processor 190 executes various processes such as gamma correction, white balance correction and a scratch correction on the video data generated by the CCD image sensor 180. Further, the image processor 190 compresses the video data generated by the CCD image sensor 180 according to a compressing format in conformity with the H.264 standards or the MPEG2 standards. The image processor 190 decodes the compressed video data. The image processor 190 can be realized by a DSP or a microcomputer.

The controller 210 is a control unit for controlling the digital video camera 100 entirely. The controller 210 can be realized by a semiconductor element. The controller 210 may be composed of only hardware or a combination of hardware and software. The controller 210 can be realized by a microcomputer.

The memory 200 functions as a work memory of the image processor 190 and the controller 210. The memory 200 can be realized by, for example, a DRAM or a ferroelectric memory.

The liquid crystal display monitor 270 can display video represented by video data generated by the CCD image sensor 180 and video represented by video data read from the memory card 240.

The gyro sensor 220 is composed of an oscillation material such as a piezoelectric element. The gyro sensor 220 converts a force caused by a Coriolis force at a time of oscillating the oscillation material such as the piezoelectric element at a constant frequency into a voltage to obtain angular velocity information. The digital video camera 100 obtains the angular velocity information from the gyro sensor 220 and drives the correcting lens in the OIS to a direction where the shake is cancelled to correct a camera shake caused by the user.

The memory card 240 is attachable to the card slot 230. The card slot 230 can be mechanically and electrically connected to the memory card 240. The memory card 240 contains a flash memory or a ferroelectric memory to be capable of storing data.

The internal memory 280 is composed of a flash memory or a ferroelectric memory. The internal memory 280 stores a control program or the like for entirely controlling the digital video camera 100.

The operation member 250 is a member for receiving operations from the user. The zoom lever 260 is a member for receiving an instruction for changing a zoom magnification from the user.

The detection switch 800 can magnetically detect that the 3D conversion lens 500 is attached to the digital video camera 100. When the detection switch 800 detects that the 3D conversion lens 500 is attached, it sends a signal indicating that the 3D conversion lens 500 is attached to the controller 210. As a result, the controller 210 can detect that the 3D conversion lens 500 is attached to and detached from the digital video camera 100.

### 1-5. Correspondence to the present invention

The 3D conversion lens 500 is one example of the 3D conversion lens. The CCD image sensor 180 is one example of an image capturing unit. The liquid crystal display monitor 270 is one example of a display unit. The controller 210 is one example of an adjusting unit for making control for adjusting the position of the optical system of the 3D conversion lens.

### 1-6. Operation

### 1-6-1. Operation when Attachment of the 3D Conversion Lens is Detected

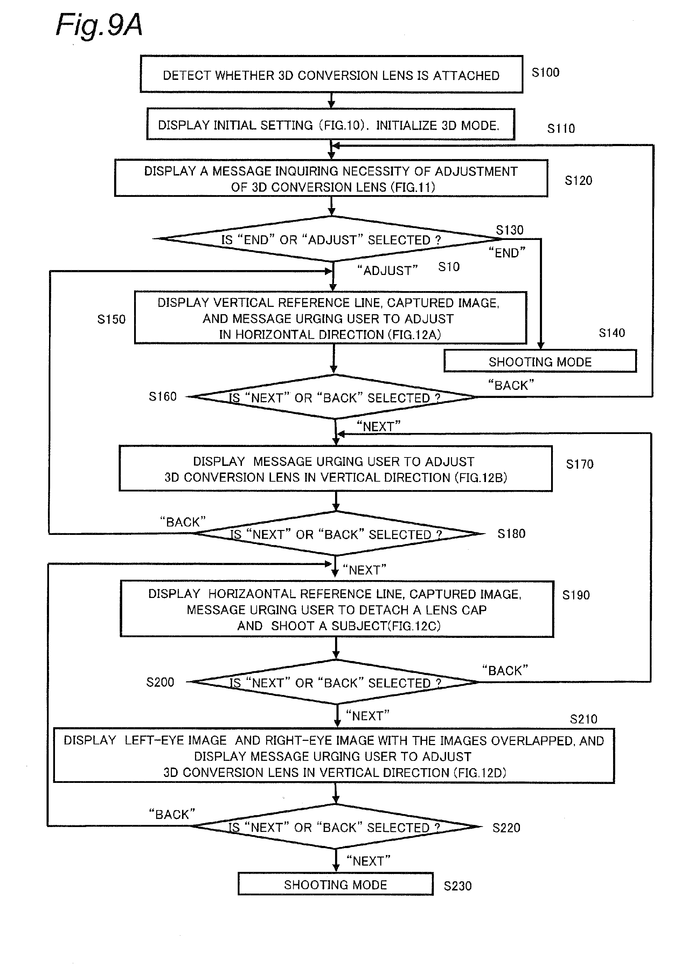

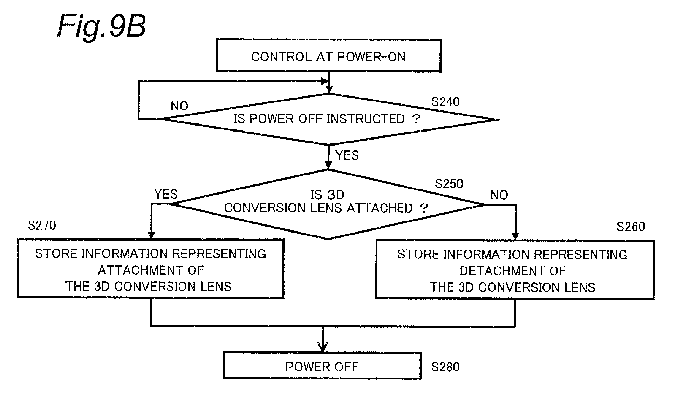

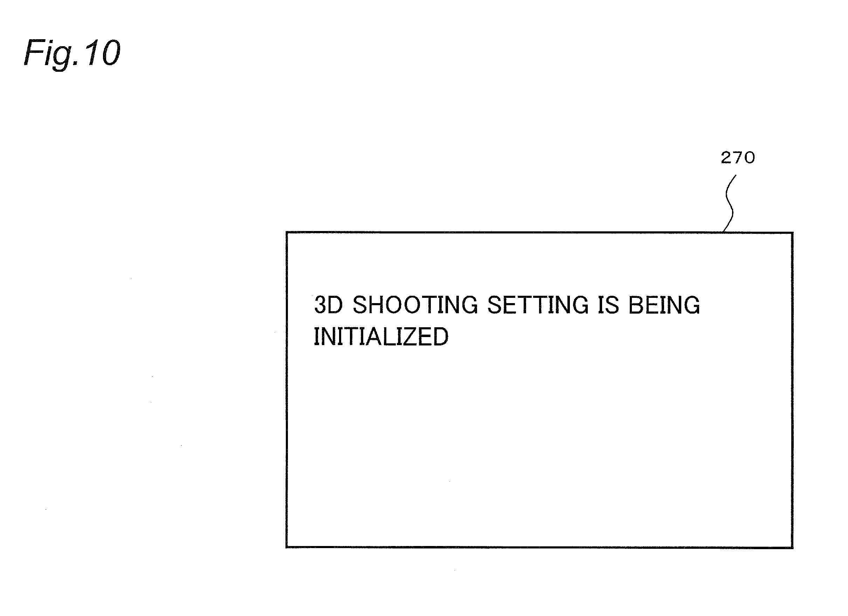

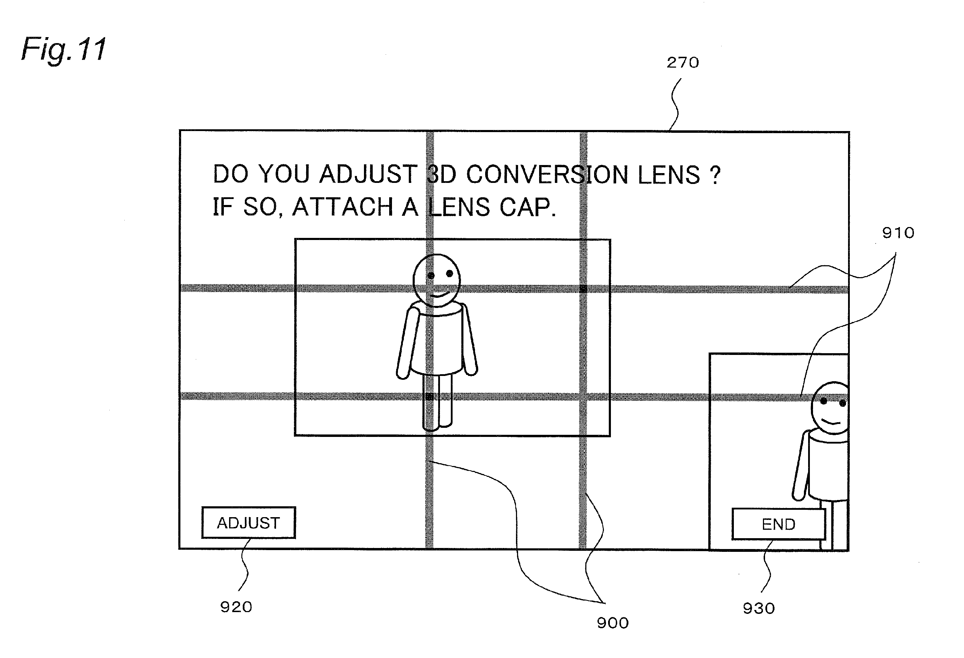

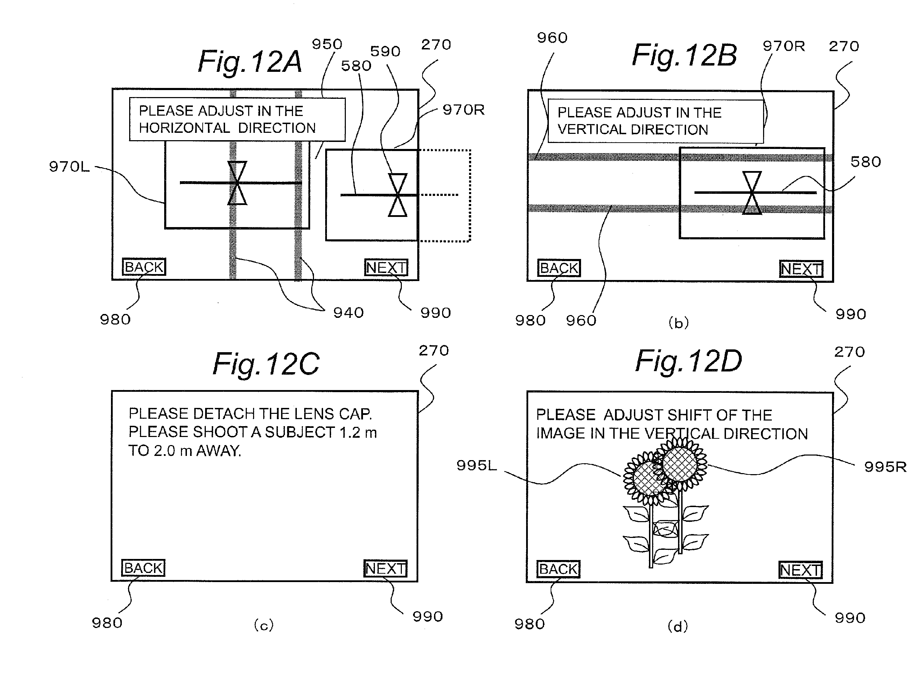

An operation for detecting the attachment of the 3D conversion lens 500 that is performed by the digital video camera 100 will be described with reference to Figs. 9A to 12. Fig. 9A is a flowchart illustrating the operation for detecting the attachment of the 3D conversion lens 500 performed by the digital video camera 100. Fig. 9B is a flowchart illustrating an operation for powering OFF the digital video camera 100. Fig. 10 is a schematic diagram for describing a display content of the liquid crystal display monitor 270 at a time of initial setting. Fig. 11 is a schematic diagram for describing a display content of the liquid crystal display monitor 270 at a time when inquiry is made if the 3D conversion lens 500 is adjusted. Figs. 12A-12B are schematic diagrams for describing a display content of the liquid crystal display monitor 270 at a time of adjusting the 3D conversion lens 500.

When the user attaches the 3D conversion lens 500 to the digital video camera 100, the controller 210 detects that the 3D conversion lens 500 is attached based on a detection signal from the detection switch 800 (S100). When detecting that the 3D conversion lens 500 is attached, the controller 210 controls the liquid crystal display monitor 270 to display a message shown in Fig. 10 (S110). Concretely, "3D shooting is being initialized" is displayed. According to the display of the message on the liquid crystal display monitor 270, the controller 210 controls the digital video camera 100 so that the initialization in a 3D mode starts (S110). Concretely, the controller 210 carries out the initialization so that the zoom lens 110 moves to a telephoto end or/and a method of the image process is set to a method different from a 2D image shooting mode. The message displayed in Fig. 10 is one example. The content of the message may be another one as long as it has the similar gist. It is the same on Figs. 11, 12, and 14.

When the initialization is completed, the controller 210 controls the liquid crystal display monitor 270 to display a message shown in Fig. 11 (S120). Concretely, the controller 210 makes an inquiry if the position of the 3D conversion lens 500 is adjusted in a manner that, for example, "Is the 3D conversion lens 500 adjusted? If so, attach the lens cap." is displayed. When the adjustment is made, the message urging the user to attach the lens cap is displayed. Further, the controller 210 controls the liquid crystal display monitor 270 to display OSD shown in Fig. 11 Concretely, the controller 210 controls the liquid crystal display monitor 270 to display a horizontal direction reference line 910 and a vertical direction reference line 900. The controller 210 controls the liquid crystal display monitor 270 to display OSD 920 indicating "Adjust" for receiving an operation from the user and OSD 930 indicating "End" to display.

When controlling the liquid crystal display monitor 270 to display an image shown in Fig. 11, the controller 210 stands by until the OSD 920 indicating "Adjust" or the OSD 930 indicating "End" are touched by the user (S130).

When the OSD 930 indicating "End" is selected by the user, the controller 210 shifts into the shooting mode (S140) and stands by until it receives a shooting start instruction form the user. On the other hand, when the image shown in Fig. 11 is displayed and the OSD 920 indicating "Adjust" is selected by the user, the controller 210 shifts into an adjusting mode. This adjusting mode includes a first adjusting mode for adjusting a position where any one of a left-eye image and a right-eye image is formed, and a second mode for aligning the position of the other image in the vertical direction with the position of the one image in the vertical direction adjusted by the first mode. The first embodiment describes a case where the position where a right-eye image is formed in the first mode is adjusted, and the position in the vertical direction where a left-eye image is formed in the second mode. However, the position where a left-eye image is formed may be adjusted in the first mode, and the position in the vertical direction where a right-eye image is formed may be adjusted in the second mode.

The controller 210 first executes the first adjusting mode. That is to say, the controller 210 controls the liquid crystal display monitor 270 to display an image shown in Fig. 12A (S150). It is assumed that, after the user recognizes the image shown in Fig. 11 when the position of the 3D conversion lens 500 is adjusted, the lens cap 570 is attached to the digital video camera 100. Concretely, the controller 210 controls the liquid crystal display monitor 270 to display two vertical direction reference lines 940. The controller 210 controls the liquid crystal display monitor 270 to display a left-eye image 970L and a right-eye image 970R captured by the CCD image sensor 180. The controller 210 controls the liquid crystal display monitor 270 to display a message "Adjust in the horizontal direction". The user can move the left-eye image 970L and the right-eye image 970R and thus a region 950 that is present between the images 970L and 970R can be moved to the horizontal direction by operating the horizontal adjustment dial 540. The user can adjust the positions of the right-eye lens 600 and the left-eye lens 620 in the horizontal direction by moving the region 950 between the two vertical direction reference lines 940. The digital video camera 100 captures the pattern 590. The digital video camera 100 can carry out focusing on the pattern 590 according to AF in a contrast system. As a result, the digital video camera 100 can carry out focusing also on the reference line 580.

When the liquid crystal display monitor 270 is controlled to display the image shown in Fig. 12A, the controller 210 stands by until an OSD 990 indicating "Next" or an OSD 980 indicating "Back" is touched (S160).

When the OSD 980 indicating "Back" is touched by the user, the controller 210 controls the liquid crystal display monitor 270 to display the image shown in Fig. 11 again (back to S120). On the other hand, the OSD 990 indicating "Next" is touched by the user, the controller 210 controls the liquid crystal display monitor 270 to display the image shown in Fig. 12B (S170). Concretely, the controller 210 controls the liquid crystal display monitor 270 to display the two horizontal direction reference lines 960. Further, the controller 210 controls the liquid crystal display monitor 270 to display only the right-eye image 970R of the images captured by the CCD image sensor 180. Only the right-eye image 970R is displayed because if both the right-eye image 970R and the left-eye image 970L are displayed, the user might lose his/her grasp on which image should be adjusted. The controller 210 controls the liquid crystal display monitor 270 to display message "Adjust in the vertical direction". The user operates the second vertical adjustment dial 560 to be capable of moving the right-eye image 970R in the vertical direction. The user can adjust the position of the right-eye lens 600 in the vertical direction by moving the reference line 580 to a position between the two horizontal direction reference lines 960.

When the liquid crystal display monitor 270 is controlled to display the image shown in Fig. 12B, the controller 210 stands by until the OSD 990 indicating "Next" or the OSD 980 indicating "Back" (S180) is touched by the user.

When the OSD 980 indicating "Back" is touched by the user, the controller 210 controls the liquid crystal display monitor 270 to display the image shown in Fig. 12A (back to S150). On the other hand, when the OSD 990 indicating "Next" is touched by the user, the controller 210 executes the second adjusting mode. That is to say, the controller 210 controls the liquid crystal display monitor 270 to display the image shown in Fig. 12C (S190). Concretely, the controller 210 controls the liquid crystal display monitor 270 to display a message "Detach the lens cap. Shoot a subject 1.2 m to 2.0 m away."

When controlling the liquid crystal display monitor 270 to display the image shown in Fig. 12C, the controller 210 stands by until the OSD 990 indicating "Next" or the OSD 980 indicating "Back" (S200) is touched by the user.

When the OSD 980 indicating "Back" is touched by the user, the controller 210 controls the liquid crystal display monitor 270 to display the image shown in Fig. 12B again (back to S170). On the other hand, when the OSD 990 indicating "Next" is touched by the user, the controller 210 controls the liquid crystal display monitor 270 to display the image shown in Fig. 12D (S210). Concretely, the controller 210 controls the liquid crystal display monitor 270 to enlarge a left-eye image 995L and a right-eye image 995R in the horizontal direction and the vertical direction up to a size corresponding to a number of pixels of the liquid crystal display monitor 270 and overlap and display the respective images. The controller 210 controls the liquid crystal display monitor 270 to display message "Adjust a shift of the image in the vertical direction." The user can move the left-eye image 995L in the vertical direction by operating the second vertical adjustment dial 560. The user can adjust the position of the left-eye lens 620 in the vertical direction by shifting the position of the left-eye image 995L in the vertical direction to the position of the right-eye image 995R in the vertical direction. That is to say, in such a manner, the user can adjust displacement of the left-eye image 995L and right-eye image 995R in the vertical direction caused by a tilt of the 3D conversion lens 500 with respect to the CCD image sensor 180. When the 3D conversion lens 500 is attached to the digital video camera 100 in a tilted state, a captured image also tilts. This tilt becomes a displacement of the left-eye image and the right-eye image in an up-down direction when the user views the image. This distresses the user viewing a 3D image. However, in this embodiment, by adopting the above configuration such a failure can be prevented.

When controlling the liquid crystal display monitor 270 to display the image shown in Fig. 12D to display, the controller 210 stands by until the OSD 990 indicating "Next" or the OSD 980 indicating "Back" (S220) is touched by the user.

When the OSD 980 indicating "Back" is touched by the user, the controller 210 controls the liquid crystal display monitor 270 to display the image shown in Fig. 12C again (S190). On the other hand, when the OSD 990 indicating "Next" is touched, the controller 210 controls the digital video camera 100 entirely so that the digital video camera 100 shifts into the shooting mode (S230).

### 1-6-2. Operation at time of power OFF

After the shift into the shooting mode, the controller 210 determines whether the user instructs to power off the digital video camera 100 (S240). When the determination is made that the user instructs the powering-OFF, the controller 210 determines whether the 3D conversion lens 500 is attached to the digital video camera 100 (S250). When the determination is made that the 3D conversion lens 500 is not attached, the controller 210 stores information indicating that the 3D conversion lens 500 is not attached at the time of power OFF (for example, a flag indicating that it is not attached) into the internal memory 280 (S260). On the other hand, when the determination is made that the 3D conversion lens 500 is attached, the controller 210 stores information representing that the 3D conversion lens 500 is attached at the time of power OFF (for example, a flag representing that it is attached) into the internal memory 280 (S270). When the information relating to the attachment state of the 3D conversion lens 500 at the time of power OFF into the internal memory 280, the controller 210 controls the digital video camera 100 entirely to make the power OFF (S280).

### 1-6-3. Operation at Power ON Time

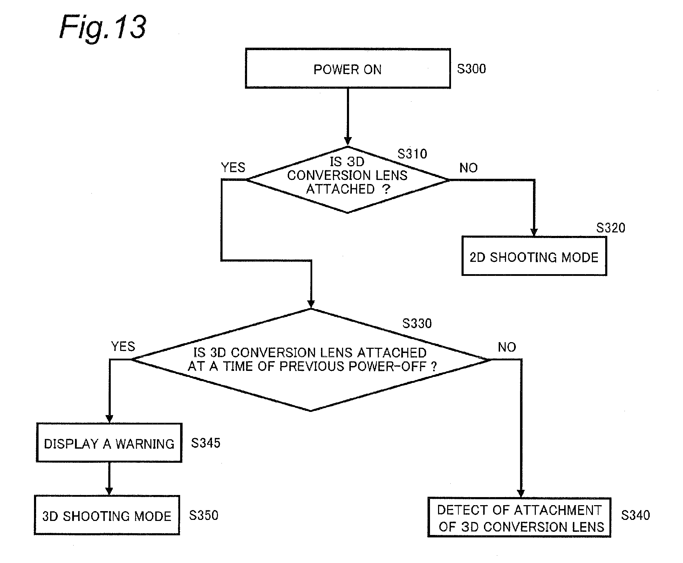

An operation of the digital video camera 100 at a time of power ON will be described with reference to Fig. 13. Fig. 13 is a flowchart for describing the operation of the digital video camera 100 at the time of power ON.

When receiving the power-ON operation from the user (S300), the controller 210 determines whether the 3D conversion lens 500 is attached at the time of power ON based on a detection signal from the detection switch 800 (S310). When the determination is made that the 3D conversion lens 500 is not attached, the controller 210 controls the digital video camera 100 entirely to shift the camera into the 2D shooting mode (S320). On the other hand, when the determination is made that the 3D conversion lens 500 is attached, the controller 210 determines whether the information representing that the 3D conversion lens 500 is attached at a time of previous power-OFF is stored in the internal memory 280 (S330).

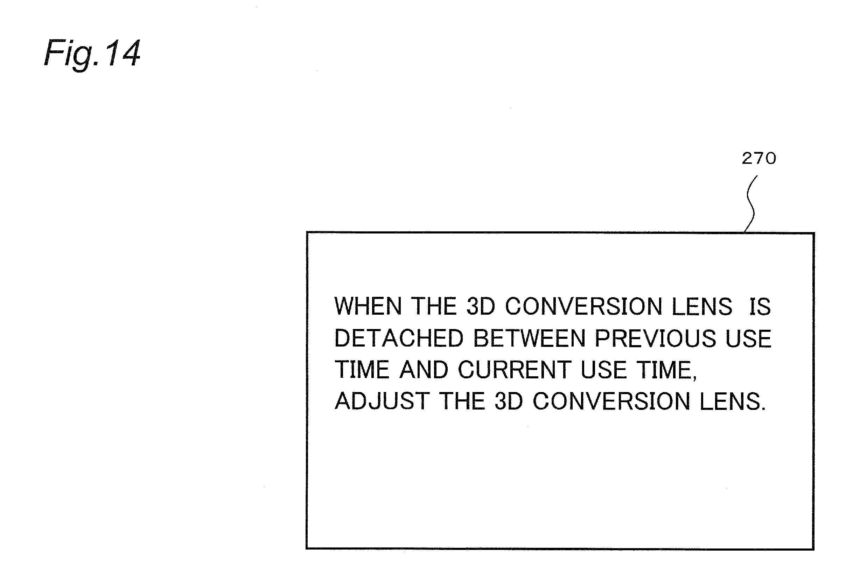

In the state that the conversion lens 500 is attached at the time of power ON, when the determination is made that the information representing that the 3D conversion lens 500 is attached at the time of previous power-OFF is stored, the controller 210 displays a warning (S345). Fig. 14 is a diagram describing a display content of the liquid crystal display monitor 270 at the time when the attachment of the 3D conversion lens 500 is detected in both the states that the power is OFF and is ON after OFF. Concretely, the controller displays a warning for an adjustment such as "when the 3D conversion lens 500 is detached between previous use time and current use time, adjust the 3D conversion lens 500". Even when the information representing that the 3D conversion lens 500 is attached at the time of previous power-OFF is stored in the internal memory 280 and the determination is made that the 3D conversion lens 500 is attached at the current power-ON time, the 3D conversion lens 500 might have been detached once during the power-OFF state and again attached thereafter. In such a case, the attachment state of the 3D conversion lens 500 is likely to be unsuitable. Therefore, even when the attachment of the 3D conversion lens 500 is detected at both the power-OFF time and the power-ON time after OFF, the warning for prompting the adjustment of the 3D conversion lens 500 is displayed.

After a predetermined time elapses from the warning display, for example, the controller 210 controls the digital video camera 100 entirely to shift into the 3D shooting mode (S350). On the other hand, the determination is made at step S330 that the information representing that the 3D conversion lens 500 is not attached is stored, the controller 210 goes to step S100 in Fig. 9A (S340) and thereafter executes a process shown in the flowchart of Fig. 9A. It is noted that a step of determining whether the adjustment by the user is necessary may be provided between steps S345 and S350, and when the determination is made that the adjustment by the user is necessary, the controller 210 may shift to step S100 to execute a process thereafter. On the other hand, when the determination is made that the adjustment by the user is not necessary, the controller 210 may shift to step S350.

### 1-7. Conclusion

In the digital video camera 100 according to the first embodiment, when the optical system in the 3D conversion lens 500 is adjusted, concretely, when the displacement between the imaging position of the left-eye image 995L in the vertical direction and the imaging position of the right-eye image 995R in the vertical direction is adjusted by the user, as shown in Fig. 12D, the left-eye image 995L and the right-eye image 995R captured by the CCD image sensor 180 are overlapped to be displayed on the liquid crystal display monitor 270. As a result, the user can visually recognize the displacement between the imaging position of the left-eye image 995L in the vertical direction and the imaging position of the right-eye image 995R in the vertical direction. Therefore, the attachment state of the 3D conversion lens 500 can be accurately adjusted.

In the digital video camera 100 according to the first embodiment, as shown in Figs. 12A and 12B, after adjustment of the imaging position of one image is determined by the user, the imaging position of the other image is determined. As a result, the user can easily adjust the displacement between the imaging position of the left-eye image 995L and the imaging position of the right-eye image 995R.

Further, in the digital video camera 100 according to the first embodiment, as shown in Fig. 11, adjustment of the imaging position of one image is determined by the user, the message for prompting the attachment of the lens cap 570 is displayed on the liquid crystal display monitor 270. In the digital video camera 100, when adjustment of the imaging position of the other image according to a relationship with the imaging position of the image of which imaging position has been already determined by the user, as shown in Fig. 12C, the message for prompting the detachment of the lens cap 570 is displayed on the liquid crystal display monitor 270. This is because of the following reason. If the 3D conversion lens 500 tilts with respect to the CCD image sensor 180, the lens cap 570 also tilts together with the 3D conversion lens 500 with respect to the CCD image sensor 180. In this tilted state, the position of the right and left triangular patterns 590 captured by the CCD image sensor 180 shifts in the vertical direction. In such a shifted state, when the displacement of the right and left triangular patterns 590 in the vertical direction is adjusted to be eliminated, a position of the subject in the vertical direction shifts at a time when the subject is shot with the lens cap 570 being detached. Therefore, the displacement between the left-eye image and the right-eye image in the vertical direction that is caused by the tilt of the 3D conversion lens 500 with respect to the CCD image sensor 180 should be adjusted with the lens cap 570 being detached. Therefore, when the displacement between the left-eye image and the right-eye image in the vertical direction caused by the tilt of the 3D conversion lens 500 with respect to the CCD image sensor 180 is adjusted, the user is urged to detach the lens cap 570. As a result, while such a failure that the 3D conversion lens 500 tilts with respect to the CCD image sensor 180 is being prevented, the user can accurately adjust the displacement between the left-eye image and the right-eye image in the vertical direction. As a result, the user can easily define the imaging position of one image, and the imaging position of the other image according to the relationship with respect to the imaging position of the image of which imaging position has been already defined.

In the digital video camera 100 according to the first embodiment, the information representing whether the 3D conversion lens 500 is attached at the time of power OFF is stored in the internal memory 280. As a result, the digital video camera 100 can recognize at the time of power ON whether the 3D conversion lens 500 is attached at the previous power-OFF time. As a result, when the 3D conversion lens 500 is attached at the previous power-OFF time, the control at step S100 in Fig. 9A, namely, the control in the case where the attachment of the 3D conversion lens is detected is not made. This is because when the 3D conversion lens 500 is attached at the previous power-OFF time, the adjustment of the 3D conversion lens 500 has been already completed in most cases. It is bothersome for the user that the control is made in the case where the attachment of the 3D conversion lens is detected despite the completion of the adjustment of the 3D conversion lens 500. Therefore, when the 3D conversion lens 500 is attached at the time of previous power-OFF, the digital video camera 100 according to the first embodiment does not make the control in the case where the attachment of the 3D conversion lens is detected.

### 2. Second Embodiment

A second embodiment where the present invention is applied to the digital video camera will be described with reference to the drawings. Description about portions that are common with the first embodiment will be omitted. The digital video camera according to the second embodiment is different from the digital video camera in the first embodiment as to the portion of the display of Fig. 12D (the display at the time when the position of the left-eye image in the vertical direction and the position of the right-eye image in the vertical direction are adjusted). This point will be described below.

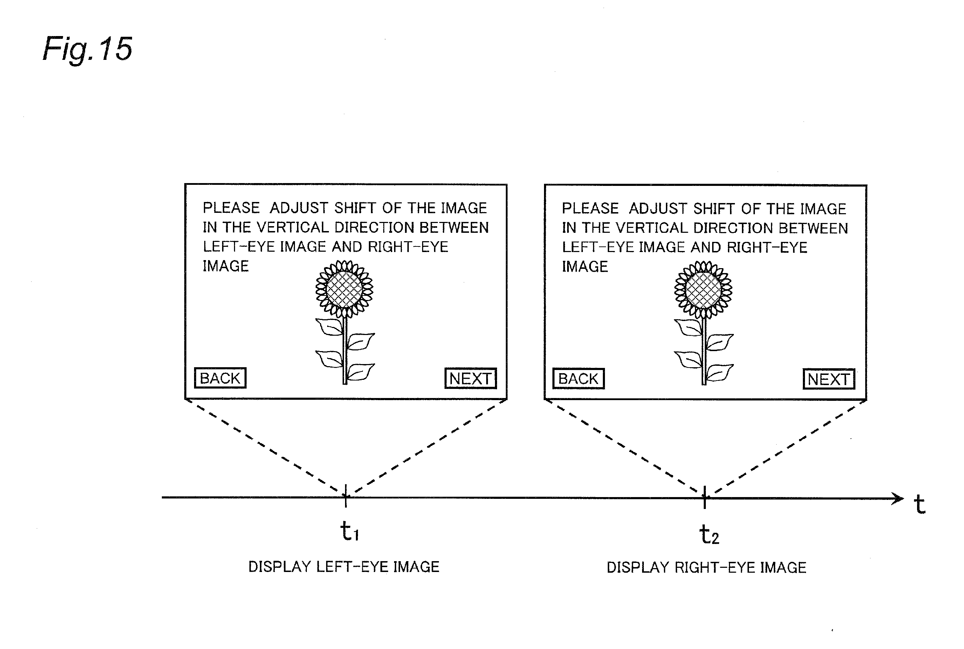

In the embodiment, the display on the liquid crystal display monitor 270 at the time when the position of the left-eye image in the vertical direction and the position of the right-eye image in the vertical direction are adjusted will be described with reference to Fig. 15. Fig. 15 is a diagram describing an image displayed on the liquid crystal display monitor 270 at the time when the position of the left-eye image in the vertical direction and the position of the right-eye image in the vertical direction are adjusted.

In the digital video camera 100 in the second embodiment, when alignment of the position of the left-eye image in the vertical direction and the position of the right-eye image in the vertical direction is made by the user, an image obtained by enlarging the left-eye image to a size corresponding to the number of pixels of the liquid crystal display monitor 270 and an image obtained by enlarging the right-eye image to a size corresponding to the number of pixels of the liquid crystal display monitor 270 are displayed on the liquid crystal display monitor 270 in a temporary alternate manner. For example, in the second embodiment, the left-eye image and the right-eye image are displayed alternately at intervals of 1/30 second.

The user can move the left-eye image to the vertical direction by operating the second vertical adjustment dial 560 similarly to the first embodiment. The user can adjust the position of the left-eye lens 620 in the vertical direction by moving the position of the left-eye image in the vertical direction to the position of the right-eye image in the vertical direction. As a result, the user can easily adjust the displacement between the imaging position of the left-eye image and the imaging position of the right-eye image.

### 3. Third Embodiment

A third embodiment where the present invention is applied to the digital video camera will be described with reference to the drawings. Description about a portion that is common with the first embodiment will be omitted. The digital video camera according to the third embodiment is different from the digital video camera according to the first embodiment as to the display in Fig. 12D (the display at the time when the position of the left-eye image in the vertical direction and the position of the right-eye image in the vertical direction are adjusted). This point will be described below.

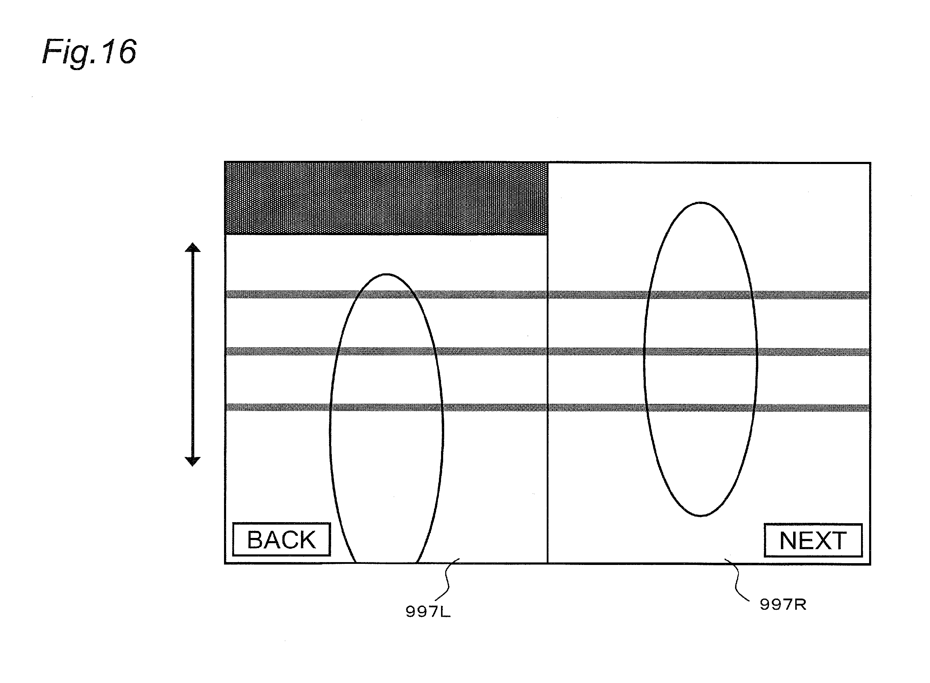

In the third embodiment, the display on the liquid crystal display monitor 270 at the time when the position of the vertical direction of the left-eye image and the position of the vertical direction of the right-eye image are adjusted will be described with reference to Fig. 16. Fig. 16 is a schematic diagram illustrating the display on the liquid crystal display monitor 270 at the time when the position of the vertical direction of the left-eye image and the position of the vertical direction of the right-eye image are adjusted.

In the digital video camera 100 according to the third embodiment, when alignment of the position of the left-eye image in the vertical direction and the position of the right-eye image in the vertical direction is made by the user, an image 997L obtained by enlarging the left-eye image to the vertical direction and an image 997R obtained by enlarging the right-eye image to the vertical direction are arranged side-by-side to be displayed on the liquid crystal display monitor 270.

The user can move the left-eye image 997L to the vertical direction by operating the first vertical adjustment dial 550 similarly to the first embodiment. The user can adjust the position of the left-eye lens 620 in the vertical direction by moving the position of the left-eye image 997L in the vertical direction to the position of the right-eye image 997R in the vertical direction. As a result, the user can easily adjust the imaging position of the left-eye image 997L and the imaging position of the right-eye image 997R.

In the third embodiment, since the left-eye image and the right-eye image are enlarged to the vertical direction respectively, the position in the vertical direction can be easily adjusted and adjusting accuracy can be easily secured.

### 4. Another Embodiment

The first to third embodiments are described above as the embodiments of the present invention. However, the present invention is not limited to them. Another embodiment of the present invention will be described below.

The optical system and the driving system of the digital video camera 100 according to another embodiment are not limited to ones shown in Fig. 8. For example, Fig. 8 illustrates the optical system having three-group configuration but it may have another group configuration of lenses. Further, the respective lenses may be composed of one lens, or may be composed of a lens group having a plurality of lenses.

The first to third embodiments illustrate the CCD image sensor 180 as an image pickup unit, but the present invention is not limited to this. For example, the image pickup unit may be composed of a CMOS image sensor or an NMOS image sensor.

Further, in the first to third embodiments, the user performs adjustment of the imaging positions of the left-eye image and the right-eye image in the horizontal direction in the CCD image sensor 180 and the imaging position of the right-eye image in the vertical direction in the CCD image sensor 180 with the lens cap 570 being attached. However, the present invention is not always limited to such a configuration. The user may be made to adjust the imaging positions of the left-eye image and right-eye image in the horizontal direction in the CCD image sensor 180 and the adjustment of the imaging position of the right-eye image in the vertical direction in the CCD image sensor 180 may be made by the user with the lens cap 570 not being attached.

In the first embodiment, the liquid crystal display monitor 270 is controlled to display an image obtained by overlapping the left-eye image with right-eye image at the time of adjusting the attachment state of the 3D conversion lens 500. However, the present invention is not always limited to such a configuration. For example, when a 3D image is reproduced to be displayed on the liquid crystal display monitor 270, the liquid crystal display monitor 270 may be controlled to display an image obtained by overlapping the left-eye image with the right-eye image. As a result, the user can visually recognize a level of a parallax between the left-eye image and the right-eye image on the liquid crystal display monitor compatible with 2D.

In this embodiment, an image obtained by overlapping (synthesizing) the left-eye image with the right-eye image is displayed on the liquid crystal display monitor 270 at the time of adjusting the attachment state of the 3D conversion lens 500. One example of the form of this overlapping (synthesizing) is shown in Fig. 12D, but the present invention may have any form as long as two images are simultaneously displayed, and the positions of the left-eye image and the right-eye image in the vertical direction can be visually recognized on the liquid crystal display monitor 270. For example, semi-transparent left-eye image and right-eye image may be overlapped to be displayed. Further, left-eye image and right-eye image may be overlapped to be displayed. A left-eye image and a right-eye image can be overlapped also by synthesizing them.

### Industrial Applicability

The present invention can be applied to imaging apparatuses such as, digital video cameras and digital still cameras.

### Description of Reference Characters

| | |
|---|---|
| 100 | digital video camera |
| 110 | zoom lens |
| 120 | detector |
| 130 | zoom motor |
| 140 | OIS |
| 150 | OIS actuator |
| 160 | detector |
| 170 | focus lens |
| 180 | CCD image sensor |
| 190 | image processor |
| 200 | memory |
| 210 | controller |
| 220 | gyro sensor |
| 230 | card slot |
| 240 | memory card |
| 250 | operation member |
| 260 | zoom lever |
| 270 | liquid crystal display monitor |
| 280 | internal memory |

## Claims

1. An imaging apparatus that can be connected to a 3D adapter having an optical system capable of condensing light for forming an image for a left-eye and light for forming an image for a right-eye and can be set into an adjusting mode for adjusting the optical system, the imaging apparatus comprising:
an image pickup unit operable to capture an image formed based on the lights condensed by the 3D adapter; and
a display unit operable to display the image captured by the image pickup unit,
wherein when the imaging apparatus is set to the adjusting mode, the display unit overlaps and displays the image for the left-eye and the image for the right-eye captured by the image pickup unit.

2. The imaging apparatus according to claim 1, wherein the adjusting mode is a mode for aligning a position in a vertical direction where the image for the left-eye is formed and a position in a vertical direction where the image for the right-eye is formed.

3. An imaging apparatus that can be connected to a 3D adapter having an optical system capable of condensing light for forming an image for a left-eye and light for forming an image for a right-eye and can be set into an adjusting mode for adjusting the optical system, the imaging apparatus comprising:
an image pickup unit operable to capture an image formed based on the lights condensed by the 3D adapter,
wherein the adjusting mode includes
a first mode for adjusting a position on the image pickup unit where any one of the image for the left-eye and the image for the right-eye is formed, and
a second mode for aligning a position on the image pickup unit in the vertical direction where the other image is formed with a position on the image pickup unit in a vertical direction where the one image adjusted in the first mode is formed.

4. The imaging apparatus according to claim 3, further comprising:
a display unit operable to display a message,
wherein the display unit displays a message for urging the user to attach a lens cap to the 3D adapter before entering the first mode and displays a message for urging the user to detach the lens cap before entering the second mode.

5. The imaging apparatus according to claim 4, wherein the lens cap has a pattern that diagonally intersects a horizontal direction of the imaging apparatus.

6. The imaging apparatus according to any one of claims 1 to 5, further comprising:
a first detecting unit operable to detect whether the 3D adapter is attached at a time of powering OFF the imaging apparatus:
an information storing unit operable to store information representing a detected result of the first detecting unit;
a second detecting unit operable to detect whether the 3D adapter is attached at a time of powering ON of the imaging apparatus; and
a determining unit operable to determine whether the adjusting mode is set based on the information stored in the information storing unit and the detected result of the second detecting unit.

7. The imaging apparatus according to claim 6, wherein when the information stored in the information storing unit at the time of powering OFF of the imaging apparatus is information representing that the 3D adapter is attached and the detected result of the second detecting unit at the time of powering ON of the imaging apparatus after the powering-off represents that the 3D adapter is attached, a warning for prompting adjustment of the 3D adapter is displayed.

8. A lens cap that is to be attached to a 3D adapter to be mounted to an imaging apparatus and adjusts a position of a lens composing the 3D adapter, the lens cap comprises a pattern for adjusting a lens position that diagonally intersects a horizontal direction of the imaging apparatus in a state that the 3D adapter is attached.
